Europäisches Patentamt

European Patent Office

Office européen des brevets

(11) Numéro de publication: **0 129 455**
**A1**

(12) **DEMANDE DE BREVET EUROPEEN**

(21) Numéro de dépôt: **84401044.7**

(22) Date de dépôt: **18.05.84**

(51) Int. Cl.³: **F 16 B 39/26**
**F 16 B 37/02**

(30) Priorité: **20.05.83 FR 8308436**

(43) Date de publication de la demande:
**27.12.84 Bulletin 84/52**

(84) Etats contractants désignés:
**BE DE GB IT NL SE**

(71) Demandeur: **SIMMONDS S.A.:**
**5 rue Michelet**
**F-92152 Suresnes Cedex(FR)**

(72) Inventeur: **Picot, Yvon**
**18 rue Chatelaine**
**F-72600 Mamers(FR)**

(74) Mandataire: **Durand, Yves Armand Louis et al,**
**Cabinet Z. Weinstein 20, Avenue de Friedland**
**F-75008 Paris(FR)**

(54) **Ecrou auto-blocable à rondelle captive et assemblage utilisant un tel écrou.**

(57) La présente invention concerne un écrou auto-blocable à rondelle captive.

Cet écrou comprend un canon intérieur taraudé (1) et une jupe extérieure (2) coaxiale au canon (1) et raccordée à celui-ci par une partie annulaire (3), la longueur axiale du canon (1) étant supérieure à celle de la jupe (2) pour permettre la retenue d'une rondelle ou embase (6) captive entre l'extrémité libre (5) du canon (1) et l'extrémité libre (7) de la jupe (2).

L'écrou de l'invention permet l'assemblage de pièces quelconques telles que des panneaux ou des tôles.

FIG. 2

EP 0 129 455 A1

-1-

**Ecrou auto-blocable à rondelle captive et assemblage utilisant un tel écrou**

La présente invention a essentiellement pour objet un écrou auto-blocable muni d'une rondelle captive et qui peut tourner par rapport à l'écrou lors de l'assemblage de pièces quelconques.

On connaît déjà des écrous auto-blocables comprenant un canon intérieur taraudé et une jupe extérieure coaxiale audit canon et raccordée à celui-ci par une partie annulaire située du côté opposé à la face d'appui de l'écrou.

Lorsqu'on effectue le vissage de tels écrous sur une vis, la partie annulaire ou de raccordement de la jupe au canon se déforme élastiquement pour réaliser un déplacement axial du canon, permettant sa mise sous tension sur la vis, ce qui, comme on le comprend, permet de réaliser le serrage.

Toutefois, on n'a jamais proposé jusqu'à présent de munir ces écrous, qui sont d'un type bien particulier, d'une rondelle captive au niveau de la face d'appui de l'écrou, ce qui conférerait à celui-ci des qualités supplémentaires.

La présente invention a pour but de combler cette lacune en proposant un écrou auto-blocable du type défini ci-dessus et caractérisé en ce que le canon taraudé de l'écrou présente une longueur axiale supérieure à celle de la jupe pour retenir par son extrémité libre, du côté de la face d'appui de l'écrou, une rondelle, embase ou analogue captive entre ladite extrémité libre du canon et celle de la jupe.

On comprend donc qu'en prolongeant le canon taraudé au-delà de l'extrémité libre de la jupe, c'est-à-dire en adoptant une structure exactement contraire des écrous antérieurs du type concerné où le canon était plus court que la jupe, on peut avantageusement combiner à l'écrou une rondelle montée captive entre l'extrémité libre du canon et de la jupe.

Selon encore une autre caractéristique de l'invention, la rondelle ou embase précitée comporte un orifice qui est conique sur au moins une partie de l'épaisseur de la rondelle et dans lequel pénètre l'extrémité libre et évasée vers l'extérieur, du canon.

On ajoutera encore ici que la rondelle présente de préférence un diamètre extérieur nettement supérieur à celui de l'écrou et est montée flottante entre l'extrémité libre et évasée du canon, et l'extrémité libre de la jupe.

Suivant encore une autre caractéristique de l'invention, l'extrémité libre et évasée du canon taraudé est constituée par une partie amincie de la paroi de ce canon et demeure dans l'orifice précité au-dessus du plan formé par la surface inférieure ou d'appui de la rondelle lorsque celle-ci bute par sa surface supérieure sur l'extrémité libre de la jupe.

L'invention vise également un assemblage de pièces quelconques, telles que par exemple des panneaux ou tôles, utilisant un écrou répondant à l'une ou l'autre des caractéristiques susmentionnées.

Mais d'autres avantages et caractéristiques de l'invention apparaîtront mieux dans la description détaillée qui suit et se réfère aux dessins annexés, donnés uniquement à titre d'exemple, et dans lesquels:

La figure 1 est une vue extérieure en élévation d'un écrou conforme à l'invention.

La figure 2 est une vue en coupe axiale de cet écrou.

La figure 3 est une vue de dessus de l'écrou.

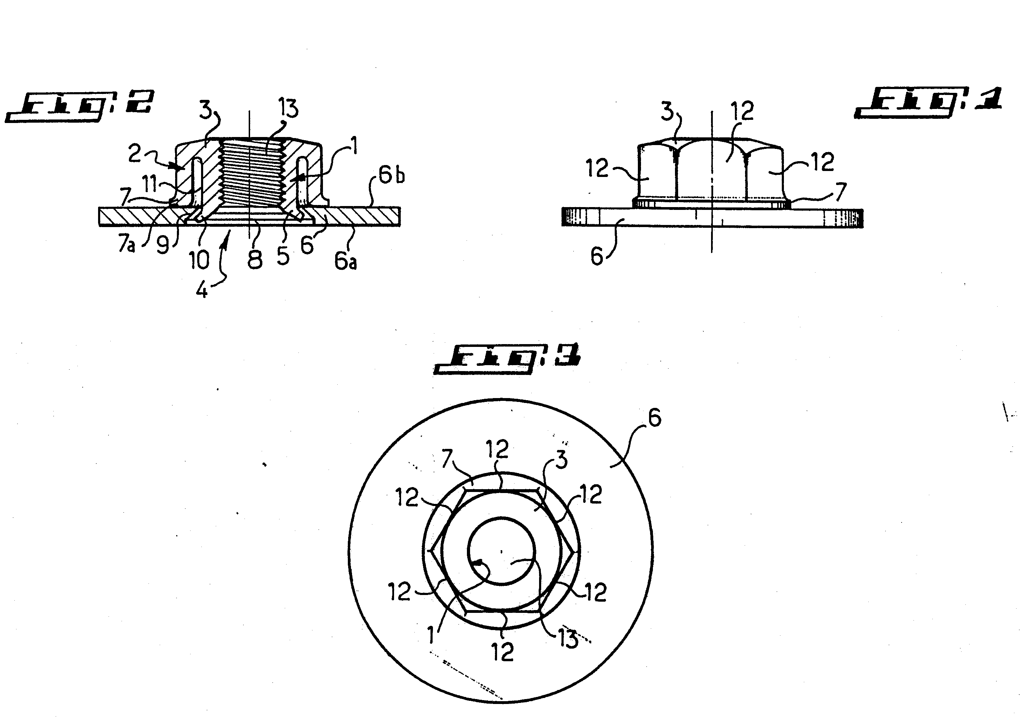

Suivant un exemple de réalisation, et en se reportant aux dessins annexés, on voit qu'un écrou auto-blocable conforme à l'invention comprend essentiellement un canon intérieur taraudé 1, une jupe extérieure 2 coaxiale au canon 1 et raccordée à celui-ci par l'intermédiaire d'une partie annulaire 3 située du côté opposé à la face d'appui 4 de l'écrou, le canon 1 présentant, comme on le voit bien sur la figure 2, une longueur axiale supérieure à celle de la jupe 2 pour retenir par son extrémité libre 5 une rondelle, embase ou analogue 6 qui est ainsi montée captive entre ladite extrémité 5 du canon 1 et l'extrémité 7 de la jupe 2.

Comme on le voit sur la figure 2, la rondelle ou embase 6 comporte un orifice central 8 qui présente une conicité 9. Cette conicité peut s'étendre sur toute l'épaisseur de la rondelle 6 ou bien sur seulement une partie de cette épaisseur comme cela est représenté sur la figure 2. Dans l'orifice 8 pénètre l'extrémité libre 5 du canon 1 de l'écrou, cette extrémité 5 étant évasée ou tournée vers l'extérieur, comme on le voit en 10 en se reportant encore à la figure 2. Suivant une réalisation préférée, l'extrémité évasée 10 du canon 1 est constituée par une partie amincie de la paroi du canon 1.

Cette extrémité évasée 10 du canon 1 retient par conséquent la rondelle 6, et, comme on le voit encore sur la figure 2, elle demeure dans l'orifice 8 au-dessus de la surface inférieure ou d'appui 6a de la rondelle 6 lorsque cette dernière bute par sa surface supérieure 6b contre l'extrémité libre 7 de la jupe 2 de l'écrou.

A cet égard, on notera que la rondelle 6 est montée quelque peu flottante entre le canon 1 et la jupe 2, par le fait que le plus petit diamètre de l'orifice 8 de la rondelle 6 est légèrement plus grand que le diamètre de la périphérie externe 11 du canon taraudé 1.

Suivant une réalisation préférée, la rondelle 6 présente un diamètre extérieur nettement supérieur à celui de l'écrou proprement dit. Ceci résout avantageusement le problème du positionnement des vis par robot au travers de plusieurs trous prévus dans les pièces que l'on veut assembler et qui doivent être nettement plus gros que la vis afin de permettre le positionnement en question. En effet, on comprend que, dans ce cas, il faut utiliser un écrou avec une rondelle intermédiaire de grand diamètre pour pouvoir rattraper le diamètre important du trou de passage de la vis. Mais bien entendu on peut utiliser une rondelle ou embase 6 de diamètre quelconque, sans sortir du cadre de l'invention.

Comme on le voit sur les figures 1 et 3, la périphérie externe de la jupe 2 comporte par exemple six pans 12, pour permettre, comme cela est connu en soi, le serrage de l'écrou à l'aide d'un outil approprié. On précisera encore ici que l'extrémité 7 de la jupe 2 comporte une face inférieure 7a qui est bien entendu plane pour pouvoir coopérer avec la surface supérieure 6b de la rondelle 6.

Pour réaliser un assemblage, l'orifice taraudé 13 du canon 1 est évidemment positionné au droit d'une vis et ensuite manoeuvré à l'aide d'un outil quelconque. La rondelle 6 étant captive, elle ne peut pas être oubliée par le monteur et on ajoutera ici qu'au moment du serrage, ladite rondelle demeure fixe, alors que l'écrou tourne, de sorte qu'il n'y a aucun risque de blessure possible ni de détérioration de la surface supérieure de l'assemblage.

On a donc réalisé suivant l'invention un écrou auto-blocable et élastiquement déformable d'un type particulier, lequel écrou est combiné avec une rondelle captive et permet entre autres un bon contrôle de la tension de l'assemblage.

L'invention n'est nullement limitée au mode de réalisation décrit et illustré qui n'a été donné qu'à titre d'exemple. C'est ainsi que le diamètre de la rondelle captive et la conformation de l'extrémité libre du canon taraudé pour retenir cette rondelle, peuvent être quelconques. L'invention comprend tous les équivalents techniques des moyens décrits ainsi que leurs combinaisons si celles-ci sont effectuées suivant son esprit.

Revendications

1. Ecrou auto-blocable comprenant un canon intérieur taraudé et une jupe extérieure coaxiale au canon et raccordée à celui-ci par une partie annulaire située du côté opposé à la face d'appui de l'écrou, ledit canon présentant une longueur axiale supérieure à celle de la jupe et retenant par son extrémité libre une rondelle captive pouvant tourner par rapport à l'écrou, caractérisé en ce que l'orifice central (8) de la rondelle plane (6) présente une conicité (9) s'étendant sur au moins une partie de l'épaisseur de la rondelle et conférant à cet orifice un plus petit diamètre qui est légèrement plus grand que le diamètre de la périphérie externe (11) du canon taraudé (1) pour permettre un montage axialement flottant de la rondelle (6) entre l'extrémité évasée (10) du canon (1) et l'extrémité libre (7) de la jupe (2) de l'écrou.

2. Ecrou selon la revendication 1, caractérisé en ce que l'extrémité libre et évasée (10) du canon (1) est constituée par une partie amincie de la paroi de ce canon et demeure à l'intérieur de l'orifice précité (8) au-dessus du plan formé par la face inférieure ou d'appui (6a) de la rondelle (6) lorsque cette dernière bute par sa surface supérieure (6b) sur l'extrémité libre (7) de la jupe (2).

3. Assemblage de pièces utilisant un écrou auto-blocable suivant la revendication 1 ou 2.

Fig. 2

Fig. 2

3  13  2  1  6b  11  7  7a  9  10  4  8  5  6  6a

Fig. 1

3  12  12  12  7  6

Fig. 3

6  7  12  12  3  12  12  1  12  13

0129455

## Office européen des brevets

**0129455**
Numéro de la demande

### RAPPORT DE RECHERCHE EUROPEENNE

EP 84 40 1044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 129 487 (TRW)<br>* page 4, ligne 11 - page 5, ligne 21; figure 6 * | 1-3 | F 16 B 39/26<br>F 16 B 37/02 |
| | --- | | |
| X | US-A-3 796 123 (DUFFY)<br>* figure 6 * | 1-3 | |
| | --- | | |
| A | FR-A- 686 295 (VACHER)<br>* page 1, lignes 28-62; figure 7 * | 1 | |
| | --- | | |
| A | US-A-2 779 375 (O'CONNOR) | | |
| | ----- | | |

| DOMAINES TECHNIQUES RECHERCHES (Int. Cl. ³) |
|---|
| F 16 B |

Le présent rapport de recherche a été établi pour toutes les revendications

| Lieu de la recherche<br>LA HAYE | Date d'achèvement de la recherche<br>31-08-1984 | Examinateur<br>VAN DER WAL W |
|---|---|---|